# EUROPEAN PATENT SPECIFICATION

(11) **EP 2 640 479 B1**
(45) Date of publication and mention of the grant of the patent: **06.04.2016**
(21) Application number: 11799516.7
(22) Date of filing: 15.11.2011
(51) Int. Cl.: A63C 19/04, B32B 3/26, A63B 23/02, A63B 6/00

(54) **RECREATION MAT**
FREIZEITMATTE
TAPIS DE JEU

(30) Priority: 19.11.2010 PL 39299110
(43) Date of publication of application: 25.09.2013
(73) Proprietor: Practic Sp. Z O.O. Sp. Komandytowa - Akcyjna, 30-690 Kraków (PL)
(72) Inventor: DRAB, Wojciech, PL-30-323 Kraków (PL); GUZIK-DRAB, Magdalena, PL-30-323 Kraków (PL); ZYCHOWICZ, Jakub, PL- 34-220 Maków Podhala ski (PL)
(74) Representative: Marek, Joanna
(86) International application number: PCT/PL2011/000117
(87) International publication number: WO 2012/067529

(56) References cited:
- CA-A1- 2 659 943
- DE-U1- 20 200 485
- US-B1- 7 207 932

## Description

The present invention relates to a recreation mat that contains at least one synthetic foam sheet. This mat is used basically to provide thermal insulation from the ground for people resting or performing exercises as well as to ensure a soft cushioning surface.

There are many types of such recreation mats known from the state of the arts, featuring various forms, starting from an ordinary sleeping pad, through various mattresses, to fitness and recreation mats.

American patent application US 4574101 discloses a multi-layer fitness mat containing the external and internal layer made of closed-cell plastic foams featuring various density. The middle layer with a relatively high density is configured to form air chambers limited by the internal surfaces of external layers. The chambers can have the form of vertical cylinders or specially sized and spaced longitudinal channels. In addition, the mat can come in a version that allows for rolling thanks to a kind of hinges formed in one of the remaining layers in the place or places where other layers are interrupted.

A similar solution, for example, has been disclosed in the American patent application US 2010173124.

US 7207932 B1 discloses an exercise device for cushioning an supporting a user while exercising and developing muscles. To ballast the user the lower mat has a pair of metal tabs.

CA 2659743 discloses a yoga mat with a heating system. The heating elements are generally flat metallic strips or small diameter wires incorporated in foam layers.

The common feature of majority of mats is that they are made of soft and resilient materials, which disables the mats to maintain the form shaped, instead they return to their original planar form.

The aim of this invention is to provide a recreation mat that features functionality, maintains its shape relatively efficiently and easily returns to its original planar form.

The nature of the invention is a recreation mat that contains at least one sheet made of synthetic foam, characterised in that at least one longitudinal structural component inside the mat sheet comprises a metal core coated with plastic.

The term "longitudinal structural component" means, according to the invention, any component with the above-mentioned construction that consists of a core and coating, of which one linear dimension in its longitudinal axis is higher than the linear dimension measured crosswise to the longitudinal axis of component. The above-mentioned at least one longitudinal structural component preferably is a longitudinal plastic-coated metal sheet.

The recreation mat according to the invention preferably includes at least two longitudinal structural components comprising basically parallel longitudinal structural ribs having metal rod cores covered with plastic coatings.

Preferably, according to the invention, the mat includes at least two longitudinal structural components comprising basically parallel transverse structural ribs having metal rod cores covered with plastic coatings.

Preferably the longitudinal structural ribs are joined with transverse structural ribs to form a plastic-coated network.

In an advantageous embodiment the mat according to the invention, includes three layers comprising synthetic foam, while outer layers are harder than the inner layer that contains at least one longitudinal structural component. Preferably the ratio between the thickness of longitudinal structural component coating and the thickness of its core measured perpendicularly to the mat surface, in particular the ratio between the thickness of structural rib coating and the diameter of rib metal core remained within the range of 0.25 to 0.9.

Preferably, the rib metal core is made of annealed aluminum or steel bars, while the rib coating is preferably made of polyethylene (PE), polypropylene (PP), polyamide, polystyrene, ABS or PVC.

Particularly suitable materials to construct the mat include: polyethylene (PE) foam, especially made of cross-linked polyethylene (PEX), polyurethane or latex foam.

In the case of multilayered versions, particular layers of the mat are welded together, while foam material pores pointing to the outside are closed with a melted foam layer as a result of heat treating.

The metal cores of longitudinal structural components, in particular ribs or metal sheets, make the mat rigid and after changing its shape provide relatively stable shape retention. The use of plastic core coatings of those structural components prevents cores from getting through the soft foam layers of the mat, protects the cores against excessive deformation and prevents cores from permanent bending and waves, thanks to this after bending and straightening, the cores return to their original straight-line or planar form.

Thanks to this innovative functionality the mat constructed according to the invention can be an extremely useful item of equipment for gymnastics and rehabilitation purposes, helping to do various exercises at different mat shapes. In addition, the mat according to the invention can be used as multi-purpose tourism equipment, which, depending on its shaping can be used as a lying mat with shaped headrest, seat, temporal canopy, windbreak, table or thermal screen. Finally, it can be also an item used by children to play with, as it allows for arranging various shapes.

The invention presented in an advantageous embodiment on the drawing, where particular figures show:
Fig. 1 - depicts the first embodiment of a mat according to the present invention in a top view (fig. 1a), in cross-section (fig. 1b) and in longitudinal section (fig. 1c),
Fig. 2 - depicts the second embodiment of a mat according to the present invention in a top view (fig. 2a), in cross-section (fig. 2b) and in longitudinal section (fig. 2c),
Fig. 3 - depicts the third embodiment of a mat according to the present invention in a top view (fig. 3a), in cross-section (fig. 3b) and in longitudinal section (fig. 3c), while
Fig. 4 - depicts the fourth embodiment of a mat according to the present invention in a top view (fig. 4a), in cross-section (fig.4b) and in longitudinal section (fig.4c).

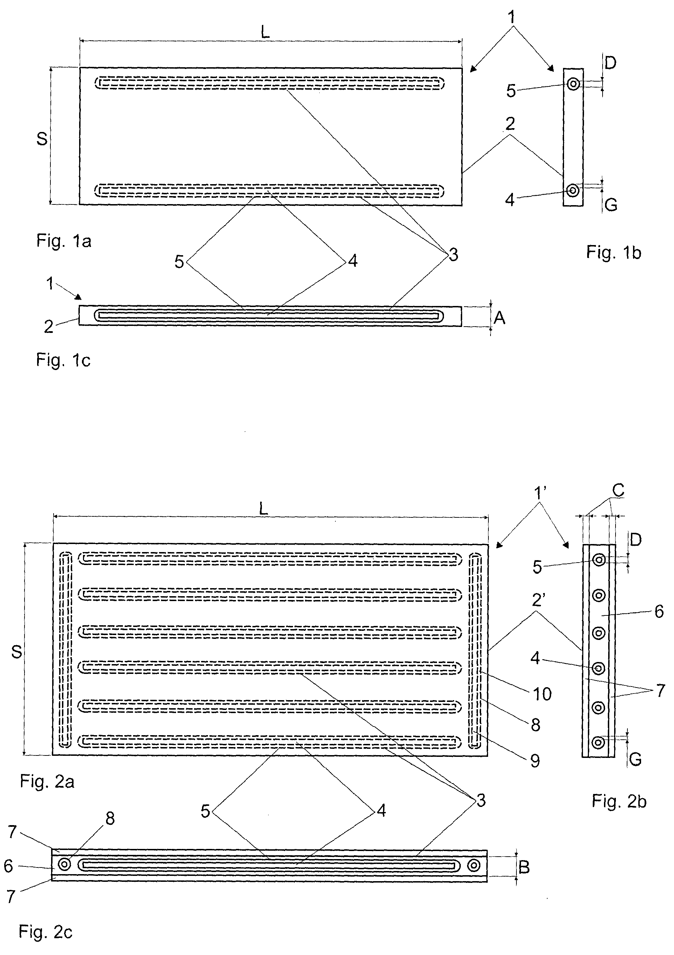

The mat 1 according to the invention presented in fig.1 has a form of sheet 2 made of porous, synthetic foam, incorporating longitudinal structural components (they are melted in) in the form of two longitudinal parallel structural ribs 3. The mat 1 is made of polyethylene (PE) foam with a density of 50 kg/m³. Foam sheet 2 has a length (L) of 180 cm, a width (S) of 50 cm and a thickness (A) of 14 mm. Structural ribs 3 have the form of metal cores 4 covered with plastic coats 5. In the presented example core 4 has a form of annealed aluminum rod, whereas its coat 5 is made of polyethylene. The diameter D of core 4 is 5 mm, while the thickness G of coat 5 equals to 2.5 mm, which results in a total rib 3 diameter of 10 mm.

Fig. 2 depicts the second embodiment of a mat 1' according to the present invention. The mat 1' is made of multi-layered sheet 2' that includes three layers: internal layer 6 of foam with a relatively low density and two external foam layers 7 surrounding it, featuring a relatively high density. Internal layer 6 is made of polyethylene (PE) foam with a density of 30 kg/m³, whereas external layers 7 are made of cross-linked polyethylene (PEX) with a density of 60 kg/m³. Neighboring layers 6, 7 are interconnected by welding. The thickness B of internal layer 6 is 12 mm, while the thicknesses C of external layers 7 equal to 3 mm. In internal layer 6 there is a set of equi-spaced six longitudinal structural components having the form of longitudinal structural ribs 3 constructed similarly to the ribs 3 of mat 1 from fig 1. Mat 1' is additionally equipped with two mutually parallel transverse structural ribs 8 with cores 9 and plastic coatings 10 and features similar construction to longitudinal ribs 3. Diameter D of each core 4 of the longitudinal ribs 3 is 6 mm, while each thickness G of coatings 5 covering ribs 3 is 1.5 mm. The radial dimensions of transverse structural ribs 8 are the same as the dimensions of longitudinal ribs 3. The total diameter of structural ribs 3, 8 is 9 mm. The presented example of mat 1' has the following dimensions: 180 cm (L) x 80 cm (S).

A certain modification of the mat embodiment presented in fig. 2 can be the mat fitted with transverse cores linked with longitudinal rib cores to create a network fully covered with a plastic coating.

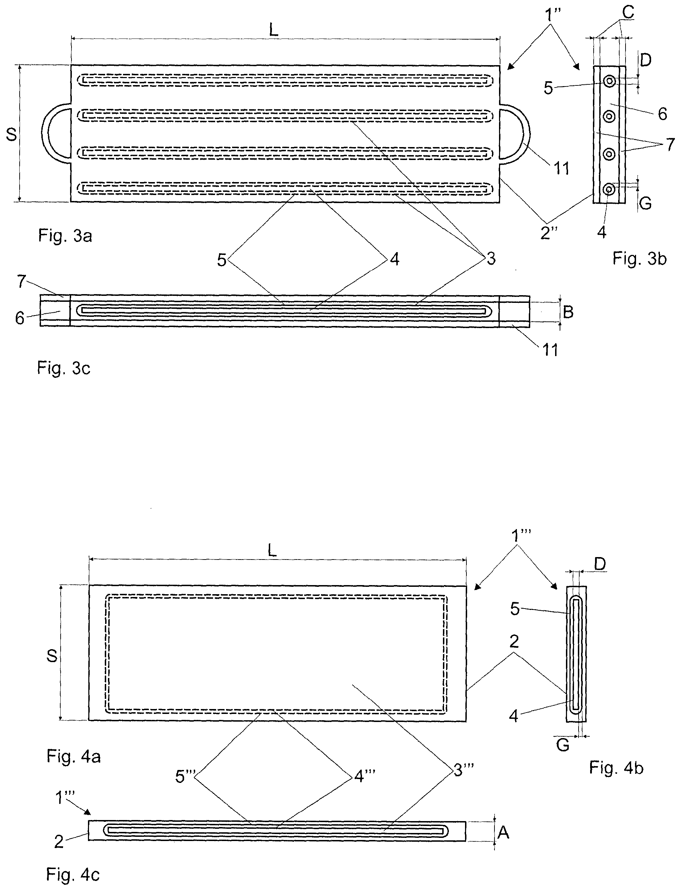

Another embodiment of multi-layered mat 1" according to the invention is presented in fig. 3. Mat 1" has a similar construction to mat 1' presented in fig. 2 differing from it by the number of longitudinal ribs 3 and the lack of transverse ribs. Four longitudinal ribs 3 are fitted with annealed steel cores 4 with a diameter (D) of 3 mm each, covered with polyethylene coatings 5 with a thickness (G) of 2.7 mm and they are placed in internal layer 6 of polyethylene (PE) foam with a density of 40 kg/m³ and a thickness (C) of 10 mm. The external layers 7 are made of cross-linked polyethylene (PEX) with a density of 50 kg/m³ and have a thickness (C) of 5 mm each. Mat 1" is equipped with handles 11 installed on opposite sides to make it easier to carry the mat, projecting from the shorter sides of mat 1", sheet 2" with the following dimensions: 180 cm (L) x 60 cm (S).

Fig. 4 shows another alternative embodiment of single-layer mat 1 "' according the invention. In this embodiment mat 1'" includes longitudinal structural component 3'" that consists of core 4'" having the form of rectangular steel sheet with a thickness (D) of 3 mm covered by a polypropylene (PP) coating with a thickness (G) of 2 mm.

Preferably, external surfaces of the mat according to the invention were subject to appropriate heat treating resulting in creating a thin layer of melted foam to close the outer mat pores.

Although the core material for longitudinal structural components presented in the examples is annealed aluminum or steel, it is obvious that, according to the invention, it is possible to use any other alloy, particularly an alloy of steel, aluminum or copper featuring plasticity that would allow for bending sheets or rod easily by hand, especially the rods with a diameter of approx. 1 centimeter or sheets of a similar thickness.

The same applies to coating that can be made of any plastic, like, for example, polyamide, polystyrene, ABS or PVC.

In the presented embodiments the ratio between longitudinal structural component coating thickness and the thickness of component core measured perpendicularly to the mat plane, which especially for longitudinal rod structural components is a ratio between structural rib thickness G and diameter D of rib metal core, ranges from 0.25 to 0.9, which defines merely the preferably range for the ratio, not a range of values necessary to reach the aim of the invention.

Mat sheets can also be made of other synthetic foams that provide proper thermal insulation properties and resilience, for example, such as other polyethylene, polyurethane or latex foams.

Finally, for the person skilled in the art it is obvious that one can use other thickness and hardness values of particular foam layers, as well as other numbers of foam layers, other numbers of longitudinal and transverse ribs, other cross-sections of rib cores than the presented circular one, other materials for metal cores and plastic coatings, other rib diameters and other coating thicknesses depending mainly on mat utility parameters, especially on its resilience.

The particular layers of multi-layered mat that contact between each other can be joined using any other method than welding, such as for example gluing.

The plans presented in figures are not scaled and are for reference purposes only.

The examples presented should not be, in any case, considered exhaustive and restricting the presented invention, the nature of which has been described in patent claims.

## Claims

1. The recreation mat that contains at least one sheet made of synthetic foam, wherein inside the sheet (2) of mat (1) there is at least one longitudinal structural component comprising a metal core coated with plastic.

2. The recreation mat according to claim 1, wherein the above-mentioned, at least one, longitudinal structural component (3"') is a longitudinal plastic-coated metal sheet (5'").

3. The recreation mat according to claim 1 or 2, wherein it contains at least two longitudinal structural components comprising basically parallel longitudinal structural ribs (3) having metal rod cores (4) covered with plastic coatings (5).

4. The recreation mat according to claim 1 or 2 or 3, wherein it contains at least two longitudinal structural components comprising basically parallel transverse structural ribs (8) having metal rod cores (9) covered with plastic coatings (10).

5. The recreation mat according to claim 4, wherein longitudinal structural ribs (3) are linked with transverse structural ribs (8) thus creating a plastic-coated network.

6. The recreation mat according to any of 1-5 claims, wherein it contains three layers comprising synthetic foam, while the hardness of external layers (7) is higher than the hardness of internal layer (6) incorporating the above-mentioned, at least one, longitudinal structural component.

7. The recreation mat according to any of 1-6 claims, wherein the ratio of longitudinal structural component coating thickness and the thickness of its core measured perpendicularly to the mat surface, in particular the ratio between thickness (G) of coating (5, 10) that covers structural rib (3, 8) and the diameter (D) of metal core (4, 9) of rib (3, 8), ranges from 0.25 to 0.9.

8. The recreation mat according to any of 1-7 claims, wherein the metal core (4, 9) of rib (3, 8) is made of annealed aluminum or steel rod, while coating (5, 10) of the rib (3, 8) is made of polyethylene, polypropylene, polyamide, polystyrene, ABS or PVC.

9. The recreation mat according to any of 1-8 claims, wherein the said synthetic foam is made of polyethylene, preferably of cross-linked polyethylene (PEX), polyurethane or latex.

10. The recreation mat according to any of 1-9, wherein particular foam layers are welded with each other, while the pores pointed to the outside of sheet (2) of mat (1) are closed with a layer of melted foam as a result of thermal treating.

## Patentansprüche

1. Eine Erholungsmatte, die mindestens einen Bogen aus dem synthetischen Schaum enthält, wo sich im Inneren des Bogens (2) der Matte (1) mindestens ein Längskonstruktionselement befindet, der einen mit dem Kunststoff beschichteten Metallkern besitzt.

2. Eine Erholungsmatte nach dem Anspruch 1, wo das oben genannte mindestens ein Längskonstruktionselement (3"') als ein mit dem Kunststoff beschichtetes Metallblech (5"') gefertigt ist.

3. Eine Erholungsmatte nach dem Anspruch 1 oder 2, die mindestens zwei Längskonstruktionselemente enthält, die grundsätzlich parallele Längskonstruktionsrippen (3) mit Metallkernstäben (4), die mit dem Kunststoff (5) beschichtet sind, besitzen.

4. Eine Erholungsmatte nach dem Anspruch 1 oder 2 oder 3, die mindestens zwei Längskonstruktionselemente enthält, die grundsätzlich parallele Querkonstruktionsrippen (8) mit Metallkernstäben (9), die mit dem Kunststoff (10) beschichtet sind, besitzen.

5. Eine Erholungsmatte nach dem Anspruch 4, wo die Längskonstruktionsrippen (3) mit den Querkonstruktionsrippen (8) verbunden sind und so bilden sie ein mit dem Kunststoff beschichtetes Netz.

6. Eine Erholungsmatte nach den Ansprüchen 1-5, die drei Schichten mit dem synthetischen Schaum enthält, wobei die Härte der äußeren Schichten (7) größer als die Härte der inneren Schicht (6), die mindestens ein oben genanntes Längskonstruktionselement besitzt, ist.

7. Eine Erholungsmatte nach den Ansprüchen 1-6, wo das Verhältnis der Stärke der Beschichtung der Längskonstruktionselemente und der Stärke deren Kern gemessen senkrecht zur Oberfläche der Matte, insbesondere das Verhältnis zwischen der Stärke (G) der Schicht (5, 10), die die Konstruktionsrippe (3, 8) beschichtet, und dem Durchmesser (D) des Metallkerns (4, 9) der Rippe (3, 8), im Bereich 0,25 bis 0,9 liegt.

8. Eine Erholungsmatte nach den Ansprüchen 1-7, wo der Metallkern (4, 9) der Rippe (3, 8) aus dem ausgeglühten Aluminium oder aus dem Stahlstab gefertigt ist, und die Beschichtung (5, 10) der Rippe (3, 8) aus PE, PP, PA, PS, ABS oder PVC gefertigt ist.

9. Eine Erholungsmatte nach den Ansprüchen 1-8, wo der genannte synthetische Schaum aus PE, am besten aus dem vernetzten Polyethylen (PEX), PUR oder Latex gefertigt ist.

10. Eine Erholungsmtte nach den Ansprüchen 1-9, wo die einzelnen Schaumschichten miteinander zusammengeschweißt sind, wobei die Poren, die in Richtung des äußeren Bogenrandes (2) der Matte (1) gerichtet sind, infolge der thermischen Bearbeitung durch die Schicht des verschmolzenen Schaums verschlossen sind.

## Revendications

1. Le tapis de loisir comprenant au moins une feuille constituée d'une mousse synthétique, où à l'intérieur de la feuille (2) du tapis (1) il y a au moins un élément de structure longitudinal comportant une âme métallique revêtue d'une matière plastique.

2. Le tapis de loisir selon la revendication 1, dans lequel au moins un élément de structure longitudinal (3"') mentionné au-dessus est formé comme une feuille de métal (5"') revêtue d'une matière plastique.

3. Le tapis de loisir selon les revendications 1 ou 2, qui comprend au moins deux éléments de structure longitudinaux ayant en principe des nervures structurelles longitudinales parallèles (3) ayant des tiges de noyau métalliques (4) recouvertes d'un revêtement (5) en matière plastique.

4. Le tapis de loisir selon les revendications 1 ou 2 ou 3, qui comprend au moins deux éléments de structure longitudinaux ayant en principe des nervures structurelles longitudinales parallèles (8) ayant des tiges de noyau métalliques (9) recouvertes d'un revêtement (10) en matière plastique.

5. Le tapis de loisir selon la revendication 4, dans lequel les nervures structurelles longitudinales (3) sont reliées avec les nervures structurelles transversales (8), formant ainsi un réseau revêtu de matière plastique.

6. Le tapis de loisir selon l'une quelconque des revendications 1-5, comprenant trois couches comprenant une mousse synthétique, la dureté des couches extérieures (7) étant supérieure à la dureté de la couche intérieure (6), comportant au moins un élément de structure longitudinal mentionné ci-haut

7. Le tapis de loisir selon l'une quelconque des revendications 1-6, dans lequel le rapport entre l'épaisseur de revêtement des éléments de structure longitudinaux et l'épaisseur de leur âme, mesurée perpendiculairement à la surface du tapis, et en particulier le rapport entre l'épaisseur (G) du revêtement (5, 10) qui recouvre la nervure structurelle (3, 8) et le diamètre (D) du noyau métallique (4, 9) de la nervure (3, 8) est compris dans la plage de 0,25 à 0,9.

8. Le tapis de loisir selon l'une quelconque des revendications 1-7, dans lequel le noyau métallique (4, 9) de la nervure (3, 8) est fait de de l'aluminium recuit ou de la tige d'acier, et le revêtement (5, 10) de la nervure (3, 8) est fait de polyéthylène, polypropylène, polyamide, polystyrène, ABS ou PVC.

9. Le tapis de loisir selon l'une quelconque des revendications 1-8, dans lequel ladite mousse synthétique est faite de polyéthylène, de préférence polyéthylène réticulé (PEX), polyuréthane ou latex.

10. Le tapis de loisir selon l'une quelconque des revendications 1-8, dans lequel les couches individuelles de mousse sont soudées les uns avec les autres, les pores faisant face à l'extérieur de la feuille (2) du tapis (1) sont, suite au traitement thermique, fermés par une couche de mousse en fusion.
